# EUROPEAN PATENT APPLICATION

(11) **EP 3 364 515 A1**
(43) Date of publication of application: **22.08.2018**
(21) Application number: 17156802.5
(22) Date of filing: 20.02.2017
(51) Int. Cl.: H02J 7/00, H02J 7/14, H02J 50/10

(54) **SUBSEA POWER DISTRIBUTION SYSTEM AND METHOD OF ASSEMBLING THE SAME**

(71) Applicant: Robert Bosch GmbH, 70442 Stuttgart (DE)
(72) Inventor: Orth, Alexandre, 97297 Waldbuettelbrunn (DE); Dewan, Rahul, 821637 Singapore (SG); Voss, Martin, 70499 Stuttgart (DE); Tom, Kevin, 576149 Singapore (SG); Sengebusch, Falco, 573943 Singapore (SG)
(74) Representative: Thürer, Andreas

(57) **Abstract**

Various embodiments provide a subsea power distribution system for distributing power to one or more subsea nodes (230). The system includes an autonomous power source (210) positioned at or proximal to a seabed, and a mobile subsea vehicle (220) coupled to the autonomous power source. The mobile subsea vehicle is configured to receive power from the autonomous power source and distribute power to the one or more subsea nodes (230).

## Description

### Technical Field

The present invention relates to a subsea power distribution system and a method of assembling the subsea power distribution system.

### Background

In subsea oil and gas fields, many sensors and monitoring devices are needed during the field's entire life cycle: from reservoir surveillance, seismic monitoring, drilling, installation, operation till plug and abandonment. These sensors and monitoring devices not only gather data, but also transmit the data to a central station for further analysis and interpretation. Powering these devices is crucial for integrity management of the assets in the oil field.

A conventional solution for powering subsea monitoring devices makes use of permanently deployed ocean-bottom cable. In such a configuration, power is supplied via an umbilical from an FPSO (floating production, storage and offloading) ship which also supplies power to the production unit of the oil field.

There are other solutions which do not connect monitoring devices and sensors to any cable, but provide battery in the monitoring devices and sensors. Once the batteries are discharged after operation for some months, new batteries are installed by a ROV (remotely operated vehicle) at the sea-floor, or the monitoring devices and sensors are hoisted into a ship by the ROV for battery exchange by qualified technical personnel. In both approaches, a ROV with a human controller on a ship is required which incurs high costs.

In the above solutions, there is a need for a support vessel either for supplying power or for maintenance/exchange of batteries of the subsea sensors and monitoring devices that are spread across the entire oil and gas field at the seabed. Support vessels are not only very expensive, but also require human intervention and are prone to risks associated with harsh weather at sea.

### Summary

According to the present invention, a subsea power distribution system as claimed in claim 1 is provided. A method of assembling a subsea power distribution system according to the invention is defined in claim 14. The dependent claims define some examples of such a subsea power distribution system and method, respectively.

### Brief Description of the Drawings

In the drawings, like reference characters generally refer to the same parts throughout the different views. The drawings are not necessarily to scale, emphasis instead generally being placed upon illustrating the principles of the invention. In the following description, various embodiments are described with reference to the following drawings, in which:
Fig. 1 shows a block diagram of a subsea power distribution system according to various embodiments.
Fig. 2 shows a block diagram of a subsea power distribution system according to an exemplary embodiment.
Fig. 3 shows a block diagram of a cable connection of a mobile subsea vehicle according to an exemplary embodiment.
Fig. 4 shows a schematic diagram of a wireless connection of a mobile subsea vehicle according to an exemplary embodiment.
Fig. 5 shows a schematic diagram of a mechanical coupling of a mobile subsea vehicle according to an exemplary embodiment.
Fig. 6 shows a block diagram of an autonomous power source according to an exemplary embodiment.

### Description

Various embodiments provide a subsea power distribution system for distributing power to subsea nodes in a simple, flexible and cost-efficient manner.

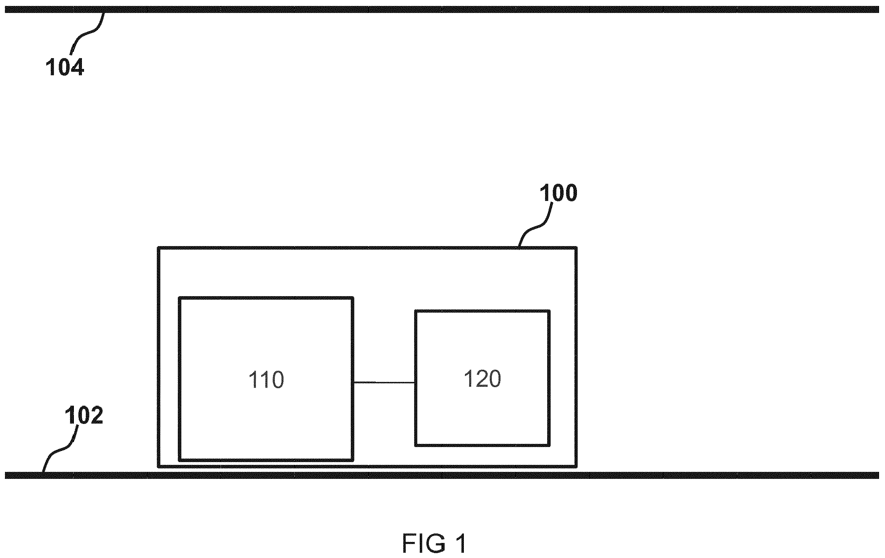

Fig. 1 shows a block diagram of a subsea power distribution system according to various embodiments. As shown in Fig. 1, a subsea power distribution system 100 for distributing power to one or more subsea nodes (not shown) includes an autonomous power source 110 positioned at or proximal to a seabed 102, and a mobile subsea vehicle 120 coupled to the autonomous power source 110. The mobile subsea vehicle 120 is configured to receive power from the autonomous power source 110 and to distribute power to the one or more subsea nodes.

The mobile subsea vehicle 120 may be coupled to the autonomous power source 110 through a direct connection such as a direct electrical connection via a cable connection. The direct electrical connection may be achieved by providing a respective terminal at the autonomous power source 110 and the mobile subsea vehicle 120 for the cable connection inbetween. In another embodiment, the mobile subsea vehicle 120 may be coupled to the autonomous power source 110 through a mechanical coupling, so that mechanical power generated in the autonomous power source 110 is transmitted to a dynamo included in the mobile subsea vehicle for further conversion to electrical power. In a further embodiment, the mobile subsea vehicle 120 may be coupled to the autonomous power source 110 through an indirect connection such as a wireless connection, e.g., an inductive connection. The wireless connection may be achieved by providing an inductive connector at each of the autonomous power source 110 and the mobile subsea vehicle 120 for wireless connection inbetween. Similarly, the mobile subsea vehicle 120 may be configured to be coupled to the subsea nodes through at least one of a cable connection, a wireless connection or a mechanical coupling, as described in more detail below.

The mobile subsea vehicle 120 may be positioned at or above the seabed. The mobile subsea vehicle may include at least one of an autonomous underwater vehicle (AUV) or a remotely operated vehicle (ROV). The AUV or the ROV may be configured to travel to the one or more subsea nodes for power distribution autonomously or under the control of a remote operator.

In addition to distributing power, the mobile subsea vehicle 120 may be further configured to transmit data among the autonomous power source 110 and the one or more subsea nodes.

In an exemplary embodiment, the mobile subsea vehicle 120 may include a transceiver configured to transmit data wirelessly. In another exemplary embodiment, the mobile subsea vehicle 120 may use a cable to transmit data among the autonomous power source 110 and the one or more subsea nodes. The cable may be a communication cable for data transmission, or may be a composite power and communication cable configured to transmit both power and data between the autonomous power source 110 and the one or more subsea nodes.

The autonomous power source 110 is positioned at the seabed 102 (also referred to as sea floor or sea bottom), or proximal to the seabed 102, e.g., in deep ocean water above the seabed 102 and far away from the sea surface 104. The depth from the surface 104 to the seabed 102 may be varied, e.g. in a range of 10-6000 meters. The autonomous power source 110 may be positioned directly on the seabed 102, or may be a few meters above the seabed 102 when installed on a platform located at the seabed 102. In an exemplary embodiment, the autonomous power source 110 is positioned in a neighboring area of the one or more subsea nodes, for example, in a central area of the subsea nodes. The position of the power source 110 may depend on the total number and position layout of the subsea nodes. In an exemplary embodiment, the position of the power source may be selected to be a position which offers the lowest cabling cost or require the shortest traveling path for the mobile subsea vehicle. The area covered by the subsea nodes may be between a few meters up to a few kilometers. Accordingly, the autonomous power source 110 may be positioned near the subsea nodes where power supply is required, such that the autonomous power source can be deployed at the seabed more flexibly and independently with reduced limitation on its positions. This would further eliminate the need for a surface cable to connect the subsea nodes to a surface facility to obtain power.

In this context, the autonomous power source refers to a stand-alone and independent power source which is capable to provide or supply power autonomously and independently without being supplied with power from a power line or other power supply network (e.g. from a surface vessel). The subsea autonomous power source 110 may include one or more of an autonomous power generator or a power storage. Examples of the power generator may include but are not limited to a thermoelectric power generator, a hydroelectric power generator (e.g., a tidal power generator, wave power generator), an organic rankine cycle based power generator, a vibration power generator, and a fuel cell. The autonomous power generator may be a device which stops generating power only when the device fails or the energy source for power generation (e.g. hot and cold water for a thermoelectric power generator) is not available. Examples of the power storage may include but are not limited to a supercapacitor, a hydraulic accumulator, a mechanical flywheel and a battery, e.g. a large chemical battery with substantial power capacity. In case of power storages, the power storage capacity may be selected in such a way that it can supply power for a predetermined period during which the power source 110 will supply power autonomously.

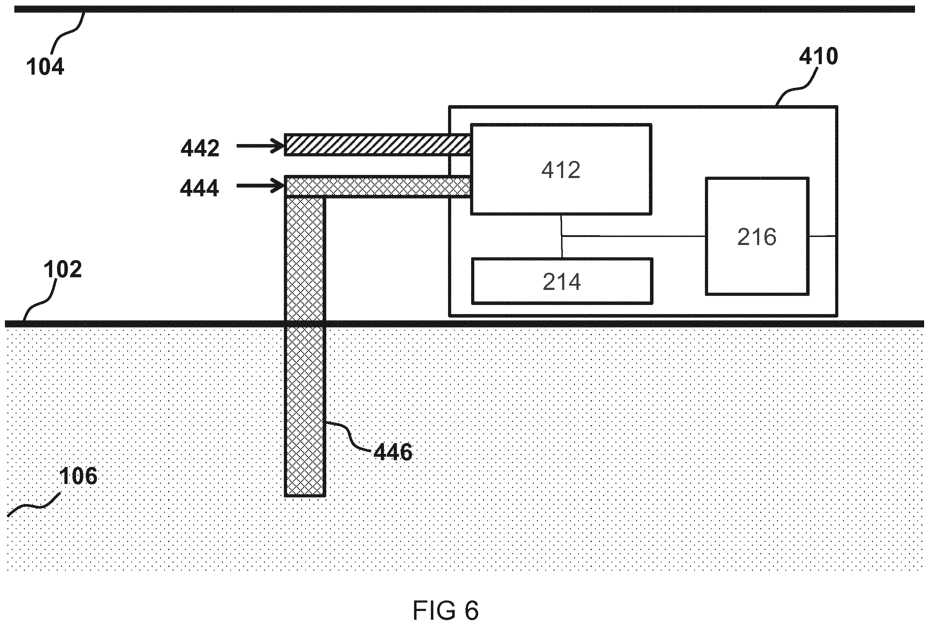

In an exemplary embodiment, the autonomous power source 110 includes a thermoelectric power generator configured to generate power based on temperature difference between sea water and a geothermal medium, wherein the geothermal medium is from at least one of a geothermic well or a water reservoir, as will be described in more detail below with reference to Fig. 6. The geothermic well or the water reservoir is located underground below the seabed 102, and supplies the geothermal medium with a higher temperature to the autonomous power source 110.

The autonomous power source 110 may further include a DC/DC converter. The DC/DC converter may be configured to step up or step down the voltage for transmission and distribution to the mobile subsea vehicle 120 and/or the subsea nodes. In a further exemplary embodiment, the autonomous power source 110 may include a DC/AC converter to convert DC (direct current) power from the autonomous power source 110 to AC (alternating current) power for subsequent distribution to the mobile subsea vehicle 120 and/or the subsea nodes, for example, if AC power is needed at the mobile subsea vehicle 120 and/or the subsea nodes.

At least one of the subsea nodes may include a subsea monitoring device positioned on the seabed 102 or below the seabed 102. The subsea monitoring device may be configured to sense and monitor subsea environmental conditions and/or conditions of the subsea oil and gas production field. The subsea monitoring device may include one or more of a seismic sensor, a motion sensor, a strain sensor, a pressure sensor, a temperature sensor, a vibration sensor, or a leak detector. The subsea monitoring device may further include a transceiver for transmitting data monitored by the subsea monitoring device. A processor may further be included in the subsea monitoring device for data processing, for example.

In various embodiments above, the subsea power distribution system 100, including the autonomous power source 110 and the mobile subsea vehicle 120, is positioned at or proximal to the seabed 102. In this manner, no connection to sea surface 104, such as a surface cable connected to a ship, is needed.

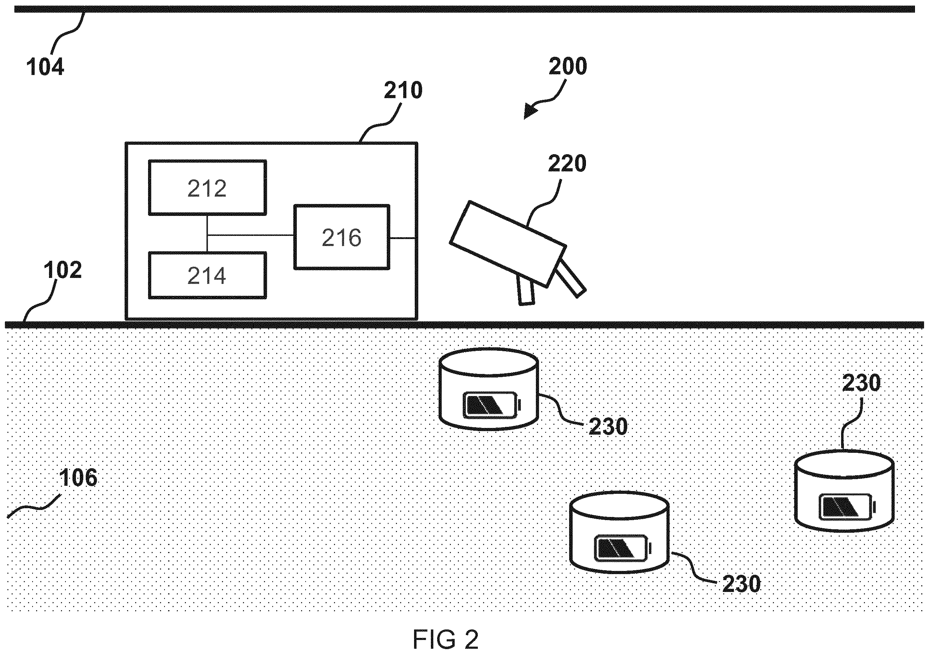

Fig. 2 shows a block diagram of a subsea power distribution system according to an exemplary embodiment. Similar to the subsea power distribution system 100 of Fig. 1, the subsea power distribution system 200 according to the embodiment of Fig. 2 includes an autonomous power source 210 positioned at or proximal to the seabed 102, and a mobile subsea vehicle 220 coupled to the autonomous power source 210. Various embodiments described in the embodiments of Fig. 1 above are analogously valid for the embodiments of Fig. 2, and vice versa.

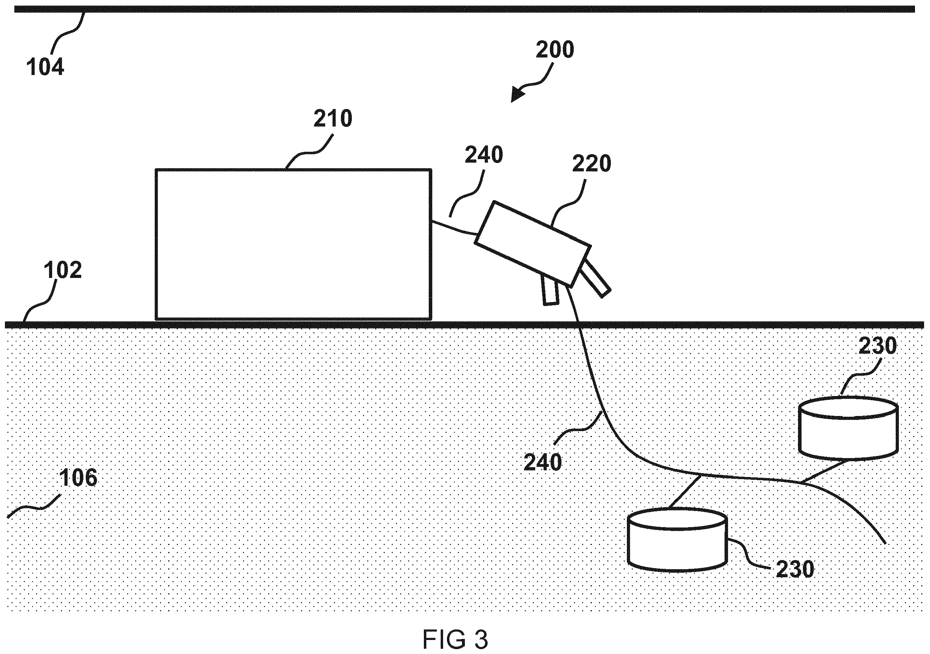

The mobile subsea vehicle 220 may be coupled to the autonomous power source 210 through at least one of a cable connection, a wireless connection or a mechanical coupling. Similarly, the mobile subsea vehicle 220 may be configured to be coupled to the subsea nodes 230 through at least one of a cable connection, a wireless connection or a mechanical coupling, as described in more detail with reference to Figs. 3-5 below.

According to various embodiments, the mobile subsea vehicle 220 is configured to be coupled to the subsea nodes 230 via a cable connection for distributing power to the subsea nodes. The cable may be a subsea cable, also referred to as submarine power cable, and may include at least one of a direct current (DC) power cable (e.g. a high voltage direct current power cable), or an alternating current (AC) power cable. The mobile subsea vehicle 220 and the subsea nodes 230 may each include a terminal or socket for connecting or receiving the cable. In various embodiments, the cable, used for electrical connection between the mobile subsea vehicle 220 and the subsea nodes 230, is positioned or deployed underwater, and is not connected to any surface facility at the sea surface 104.

According to various embodiments, the mobile subsea vehicle 220 may be configured to be coupled to the subsea nodes 230 via a wireless connection. In an exemplary embodiment, the mobile subsea vehicle 220 may include a first inductive connector, e.g. coils or plates, configured for establishing the wireless connection with a second inductive connector of the subsea nodes 230, so as to distribute power to a rechargeable power storage of the subsea nodes 230.

According to various embodiments, the mobile subsea vehicle 220 may be configured to be coupled to the subsea nodes 230 via a mechanical coupling. In an exemplary embodiment, the mobile subsea vehicle 220 may include a first interlocking element configured for mechanically coupling with a second interlocking element of the one or more subsea nodes 230, so as to transmit mechanical power from the mobile subsea vehicle 220 to the subsea nodes 230. The mobile subsea vehicle 220 may further include a motor configured to generate mechanical power, e.g. from the power received from the autonomous power source 210 or the power storage in the mobile subsea vehicle 220. The first interlocking element and the second interlocking element are configured to transmit the mechanical power to a dynamo of the one or more subsea nodes 230. The dynamo is configured to convert the received mechanical power to electrical power for charging a rechargeable power storage of the one or more subsea nodes 230. In this manner, the mobile subsea vehicle 220 is configured to deliver power to the subsea nodes via dynamo charging.

Through the configured coupling with the autonomous power source 210 and the subsea nodes 230, the mobile subsea vehicle 220 is configured to receive power from the autonomous power source 210 and to distribute power to one or more subsea nodes 230. The power distributed to the subsea nodes 230 may be directly used by the load at the subsea nodes 230, or may be used to charge a rechargeable power storage (e.g. a rechargeable battery) at the subsea nodes 230. In a further exemplary embodiment, the mobile subsea vehicle 220 may carry replacement batteries, and may be configured to exchange the battery of the subsea nodes 230.

The autonomous power source 210 is positioned at the seabed 102, or proximal to the seabed, e.g. in deep ocean water above the seabed 102 and far away from the sea surface 104. In an exemplary embodiment, the autonomous power source 210 is positioned in a neighboring area of the one or more subsea nodes 230.

In an exemplary embodiment, the autonomous power source 210 includes an autonomous power generator 212, such as a thermoelectric power generator, a hydroelectric power generator (e.g., a tidal power generator, a wave power generator), an organic rankine cycle based power generator, a vibration power generator, or a fuel cell. The autonomous power source 210 further includes a power storage 214, such as a rechargeable battery, a supercapacitor, a hydraulic accumulator, or a mechanical flywheel, connected to the autonomous power generator 212 for storing the power generated by the autonomous power generator 212. The power storage 214 is able to supply peak demands of the subsea nodes 230, depending on the power demand of the subsea nodes 230.

In an exemplary embodiment, the autonomous power generator 212 may include a thermoelectric power generator configured to generate power based on temperature difference between sea water and a geothermal medium, wherein the geothermal medium is from at least one of a geothermic well or a water reservoir.

The autonomous power source 210 may further include a power converter 216, for example, a DC/DC converter, for stepping up or stepping down the voltage of the generated or stored power for distribution to the mobile subsea vehicle 220 and the one or more subsea nodes 230. The conversion ratio of the power converter 216 depends on design parameters on how power is to be transmitted to the mobile subsea vehicle 220 and the subsea nodes 230 and depends on the power requirement of the mobile subsea vehicle 220 and the subsea nodes 230. In an exemplary embodiment, the power converter 216 may include a DC/DC boost converter or a DC/DC buck-boost converter for stepping up the voltage. In a further exemplary embodiment, the power converter 216 may include a DC/AC converter to convert DC power from the autonomous power source 110 to AC power for subsequent distribution to the mobile subsea vehicle 220 and the subsea nodes 230.

In a further exemplary embodiment, the autonomous power source 210 may include the power storage 214 and the power converter 216, without the power generator 212. In various embodiments, the autonomous power source 210 may include either one or both of the power generator 212 and the power storage 214, with or without the power converter 216. The power storage 214 may include a supercapacitor, a hydraulic accumulator, a mechanical flywheel, or a battery, e.g. a large chemical battery with substantial power capacity, which provides sufficient power to the subsea nodes 230 for a predetermined time period.

One or more of the subsea nodes 230 may include a DC/DC converter, for example, to step up or step down the voltage of the electrical power distributed from the mobile subsea vehicle 220 to appropriate levels required by the subsea nodes 230. In a further exemplary embodiment, the subsea nodes may include an AC/DC converter to convert AC power received from the mobile subsea vehicle 220 to DC power for powering the subsea nodes 230.

At least one of the subsea nodes 230 may include a subsea monitoring device positioned on the seabed 102, or in the underground 106 below the seabed 102. The subsea monitoring device is configured to sense and monitor subsea environmental conditions and/or conditions of the subsea oil and gas production field. The subsea monitoring device 230 may include one or more of a seismic sensor, a motion sensor, a strain sensor, a pressure sensor, a temperature sensor, a vibration sensor, or a leak detector. The subsea monitoring device 230 may further include a transceiver for transmitting data monitored by the subsea monitoring device, and/or a processor for data processing, for example.

Fig. 3 shows a block diagram of a cable connection of the mobile subsea vehicle 220 according to an exemplary embodiment. Various embodiments described in the embodiments of Figs. 1 and 2 above are analogously valid for the embodiments of Fig. 3, and vice versa.

In this embodiment of Fig. 3, the mobile subsea vehicle 220 is coupled or connected to the autonomous power source 210 via a cable 240, so as to receive power from the autonomous power source 210. The mobile subsea vehicle 220 may be configured to be coupled or connected to the respective subsea node 230 via the cable 240 to distribute power to the respective subsea node 230. A respective terminal or socket may be provided at the autonomous power source 210, the mobile subsea vehicle 220 and the subsea node 230 for connecting or receiving the cable 240.

In an exemplary embodiment as shown in Fig. 3, the subsea nodes 230 are located in the underground 106 below the seabed 102. The cable 240 is partially positioned on the seabed 102 for connection to the power source 210, and is partially positioned in the underground 106 below the seabed for connection to the subsea nodes 230. In a further embodiment (not shown in Fig. 3), the subsea nodes 230 are positioned at or above the seabed 102, and the cable 240 may be positioned at or above the seabed 102 accordingly. Depending on the design and requirements, a plurality of cables 240 may be connected in an optimal layout that optimizes the locations of the subsea nodes 230 at or proximal to the seabed 102.

The cable 240 is positioned or deployed underwater, and is not connected to any surface facility at the sea surface 104. The cable 240 may include at least one of a DC power cable or an AC power cable. The selection of DC or AC power cable will depend on factors such as the type of the load (e.g, DC powered load or AC powered load), the distance to the load, the associated costs of the cable and power converters. The cable 240 may directly supply power to the subsea nodes 230, or may be connected to charge one or more batteries of the subsea nodes 230 if the subsea nodes 230 are powered by the batteries therein.

In addition to receiving and distributing power, the mobile subsea vehicle 220 may also be configured to retrieve data from the monitoring devices 230 spread across on the seabed, and transmit the retrieved data to the autonomous power source 210 or other subsea/surface devices. The data transmission may be performed via a transceiver or via the cable 240. In an exemplary embodiment, the power cable 240 may be integrated with communication channels which transmit information/data to the autonomous power source 210 for data aggregation or within the subsea nodes 230 themselves. For example, the cable 240 may include a composite power and communication cable configured to transmit both power and data among the autonomous power source 210, the mobile subsea vehicle 220, and the one or more subsea nodes 230.

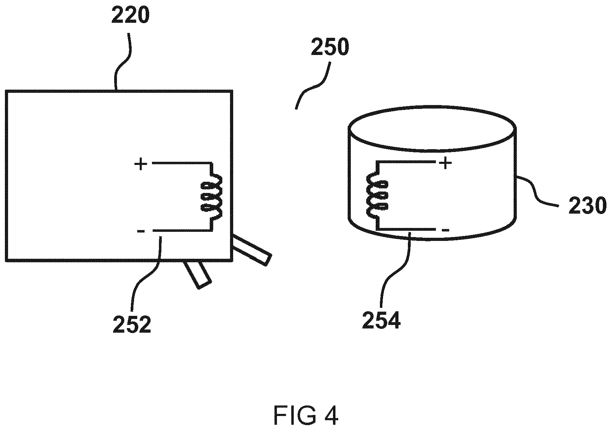

Fig. 4 shows a schematic diagram of a wireless connection 250 of the mobile subsea vehicle 220 according to an exemplary embodiment. Various embodiments described in the embodiments of Figs. 1 and 2 above are analogously valid for the embodiments of Fig. 4, and vice versa.

According to the embodiments of Fig. 4, the mobile subsea vehicle 220 may be configured to be coupled to the subsea nodes 230 via a wireless connection 250. The mobile subsea vehicle 220 may include a first inductive connector 252, e.g. coils or plates, configured for establishing the wireless connection 250 with a second inductive connector 254 of the subsea nodes 230, so as to inductively coupled with each other to distribute power to a rechargeable power storage of the subsea nodes 230.

In an exemplary embodiment, the mobile subsea vehicle 220 may be an AUV. The AUV, without the need for human intervention from a supply vessel, can navigate on the seabed and travel to the subsea monitoring devices 230 to charge the rechargeable power storage (e.g. rechargeable battery) of subsea monitoring devices 230. In a further exemplary embodiment, the mobile subsea vehicle 220 may also be a ROV which is controlled by a remote operator to travel to the subsea monitoring devices 230 to charge the rechargeable power storage (e.g. rechargeable battery) of subsea monitoring devices 230. The charging of the batteries via the wireless connection 250 is referred to as wireless charging.

Although Fig. 4 shows the wireless connection configured between the mobile subsea vehicle 220 and the subsea nodes 230, it is understood that the similar wireless connection may also be provided between the autonomous power source 210 and the mobile subsea vehicle 220. In this manner, the charging of the mobile subsea vehicle 220 may also be performed via wireless charging wherein the mobile subsea vehicle 220 and the autonomous power source 210 may each include an inductive connector, e.g. coil, so as to be inductively coupled with each other.

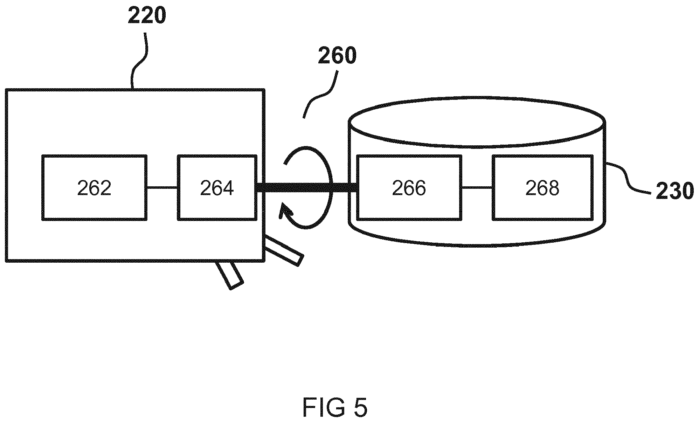

Fig. 5 shows a schematic diagram of a mechanical coupling 260 of the mobile subsea vehicle 220 according to an exemplary embodiment. Various embodiments described in the embodiments of Figs. 1 and 2 above are analogously valid for the embodiments of Fig. 5, and vice versa.

According to the embodiments of Fig. 5, the mobile subsea vehicle 220 may be configured to be coupled to the subsea nodes 230 via a mechanical coupling 260. In an exemplary embodiment, the mobile subsea vehicle 220 may include a first interlocking element (not shown) configured for mechanically coupling with a second interlocking element (not shown) of the one or more subsea nodes 230, so as to transmit mechanical power from the mobile subsea vehicle 220 to the subsea nodes 230.

The mobile subsea vehicle 220 may further include a motor 264 configured to generate mechanical power, e.g. from the power received from the autonomous power source 210 or the power storage 262 in the mobile subsea vehicle 220. The first interlocking element and the second interlocking element are configured to transmit the mechanical power to a dynamo 266 of the one or more subsea nodes 230. The dynamo 266 is configured to convert the received mechanical power to electrical power for charging a rechargeable power storage 268 of the one or more subsea nodes 230. In this manner, the mobile subsea vehicle 220 is configured to deliver power to the subsea nodes 230 via dynamo charging.

In various embodiments, the mechanical coupling 260 may be any suitable coupling for mechanical power transmission between the mobile subsea vehicle 220 and the subsea nodes 230, such as a gear coupling, a jaw coupling, or a spline coupling. Accordingly, the first interlocking element and the second interlocking element may be corresponding elements having teeth or grooves for interlocking with each other. Examples of the first interlocking element and the second interlocking element may include gears, splines, hubs, etc.

According to the embodiments of Fig. 5, the mobile subsea vehicle 220 is configured to be mechanically coupled to the subsea nodes 230 using interlocking techniques (e.g. gears) for mechanical power transmission. Similarly, the charging of the mobile subsea vehicle 220 may also be performed via the similar mechanical coupling between the autonomous power source 210 and the mobile subsea vehicle 220, such that mechanical power is generated by a motor at the autonomous power source 210 and is transmitted to a dynamo at the mobile subsea vehicle 220 for subsequent conversion to electrical power to charge the battery of the mobile subsea vehicle.

The various embodiments of the cable connection 240, wireless connection 250 and mechanical coupling 260 described in Figs. 3-5 above may be provided in any suitable combination for the respective coupling among the power source 210, the mobile subsea vehicle 220 and the subsea nodes 230. For example, the cable connection may be provided between the power source 210 and the mobile subsea vehicle 220, and the wireless connection may be provided between the mobile subsea vehicle 220 and the subsea nodes 230.

Fig. 6 shows a block diagram of an autonomous power source according to an exemplary embodiment. The autonomous power source 410 may be used as the autonomous power source 110, 210 in the subsea power distribution system 100, 200 above. Various embodiments described in the embodiments of Figs. 1-5 above are analogously valid for the embodiments of Fig. 6, and vice versa.

The autonomous power source 410 includes a thermoelectric power generator 412, and further includes the power storage 214 and the power converter 216 as described above.

The thermoelectric power generator 412 is configured to generate power based on temperature difference between sea water 442 and a geothermal medium 444. The geothermal medium 444 may be supplied or extracted from at least one of a geothermic well 446 or a underground water reservoir 446 below the seabed 102, and has a higher temperature than the sea water 442. The geothermal medium 444 may be in the form of fluid or gas, and may be water, oil, gas or a mixture thereof extracted from the geothermic well 446 or the underground water reservoir 446.

Within the thermoelectric power generator 412, a heat exchanger (not shown) is included, which is designed and configured to circulate hot fluid 444 and cold fluid 442 for maintaining the temperature difference for power generation. The source for cold side of the heat exchanger is sea water 442 from the surrounding environment of the autonomous power source 410. The sea water has a substantially constant temperature of 4°C. The source for hot side of the heat exchanger is the geothermal medium 444 from the geothermic well 446 after drilling on the seabed 102. The depth of the drilling may be determined depending on the required hot fluid temperature. In a further exemplary embodiment, as an alternative to or in addition to building the geothermic well, the hot fluid 444 may be obtained from the water reservoir 446 below the seabed if the water reservoir below the seabed can be accessed. Accordingly, the source of hot fluid is more easily accessible.

Further, during the exploration phase of oil and gas production, many holes are explored for oil and gas, e.g. the holes are dug in the vicinity of a live oil and gas field. Some holes may be abandoned if no hydrocarbon is found. According to a further exemplary embodiment of the thermoelectric power generator 412, these holes may be used for extracting hot water, and thus may be used as a hot water source for the thermoelectric power generator 412.

Compared to existing thermoelectric generators which are designed as a ring across the oil and gas pipeline and use the oil and gas pipeline as the heat source, the thermoelectric power generator 412 of the embodiments above use subsea geothermic wells or water reservoirs as the heat source for the thermoelectric power generator 412. Accordingly, the autonomous power source 410 can be placed anywhere on the seabed where the subsea monitoring devices 230 are required, and is not limited to the location of the oil and gas field. Compared to exiting thermoelectric generators which have to be placed close to the oil and gas field as the hot source is obtained from hot oil and gas mixture flowing in the oil and gas pipelines, the thermoelectric power generator 412 removes the location dependency from the vicinity of the oil and gas field. This independence from a live oil and gas field provides huge benefit for power generation, because subsea monitoring devices 230 are also required when oil and gas hot fluid is not available, for example, during exploration, reservoir surveillance, plug and abandonment phases, etc.

In addition, by providing the autonomous power source 110, 210, 410 at or proximal to the seabed and providing the mobile subsea vehicle 120, 220 close to the seabed as described in various embodiments above, the need for a support surface vessel and human operators for supplying power or for maintenance/exchange of batteries of the subsea monitoring devices which are spread across the entire oil and gas field can be eliminated. In other words, a surface cable for connecting to the surface vessel is not needed, and maintenance work including ROV transfer of batteries from surface level to subsea level is greatly reduced by the subsea power distribution system 100, 200 of the various embodiments. The need for any human intervention from shore or from a vessel is thus eliminated.

Though the above embodiments describe the subsea power distribution system 100, 200 deployed at the bottom of the sea, it is understood that the power distribution system of these embodiments may be a underwater power distribution system deployed in any suitable underwater region, such as the bottom of a lake or a river.

In a further embodiment, a method of assembling a subsea power distribution system, e.g. the subsea power distribution system 100, 200 described above, for distributing power to one or more subsea nodes is provided.

The method includes deploying an autonomous power source at or proximal to a seabed, and coupling a mobile subsea vehicle to the autonomous power source. The autonomous power source may be the autonomous power source 110, 210, 410, and the mobile subsea vehicle may be the mobile subsea vehicle 120, 220 described in various embodiments above. The mobile subsea vehicle is configured to receive power from the autonomous power source and distribute power to the one or more subsea nodes 230. The mobile subsea vehicle 120, 220 may be coupled to the autonomous power source 110, 210, 410 using terminals for cable connection, or using inductive connectors for wireless connection, or using interlocking elements for mechanical coupling.

While the invention has been particularly shown and described with reference to specific embodiments, it should be understood by those skilled in the art that various changes in form and detail may be made therein without departing from the spirit and scope of the invention as defined by the appended claims. The scope of the invention is thus indicated by the appended claims and all changes which come within the meaning and range of equivalency of the claims are therefore intended to be embraced.

## Claims

1. A subsea power distribution system for distributing power to one or more subsea nodes, the system comprising:
an autonomous power source positioned at or proximal to a seabed; and
a mobile subsea vehicle coupled to the autonomous power source, the mobile subsea vehicle being configured to receive power from the autonomous power source and distribute power to the one or more subsea nodes.

2. The subsea power distribution system of claim 1,
wherein the mobile subsea vehicle is coupled to the autonomous power source via at least one of a cable connection, a wireless connection or a mechanical coupling, for receiving power from the autonomous power source.

3. The subsea power distribution system of claim 1 or 2,
wherein the mobile subsea vehicle is configured to be coupled to the one or more subsea nodes via a cable connection for distributing power to the one or more subsea nodes.

4. The subsea power distribution system of claim 1 or 2,
wherein the mobile subsea vehicle is configured to be coupled to the one or more subsea nodes via a wireless connection.

5. The subsea power distribution system of claim 4,
wherein the mobile subsea vehicle comprises a first inductive connector configured for establishing the wireless connection with a second inductive connector of the one or more subsea nodes, so as to distribute power to a rechargeable power storage of the one or more subsea nodes.

6. The subsea power distribution system of claim 1 or 2,
wherein the mobile subsea vehicle is configured to be coupled to the one or more subsea nodes via a mechanical coupling.

7. The subsea power distribution system of claim 6,
wherein the mobile subsea vehicle comprises a first interlocking element configured for mechanically coupling with a second interlocking element of the one or more subsea nodes, so as to transmit mechanical power from the mobile subsea vehicle to the one or more subsea nodes,

8. The subsea power distribution system of claim 7,
wherein the mobile subsea vehicle further comprises a motor configured to generate the mechanical power,
wherein the first interlocking element and the second interlocking element are configured to transmit the mechanical power to a dynamo of the one or more subsea nodes, the dynamo being configured to convert the mechanical power to electrical power for charging a rechargeable power storage of the one or more subsea nodes.

9. The subsea power distribution system of any one of claims 1 to 8,
wherein the mobile subsea vehicle is further configured to transmit data among the autonomous power source and the one or more subsea nodes.

10. The subsea power distribution system of any one of claims 1 to 9,
wherein the mobile subsea vehicle comprises an autonomous underwater vehicle or a remotely operated vehicle.

11. The subsea power distribution system of any one of claims 1 to 10,
wherein the autonomous power source comprises at least one of a thermoelectric power generator, a hydroelectric power generator, an organic rankine cycle based power generator, a vibration power generator, a fuel cell, a battery, a supercapacitor, a hydraulic accumulator, or a mechanical flywheel.

12. The subsea power distribution system of any one of claims 1 to 10,
wherein the autonomous power source comprises a thermoelectric power generator configured to generate power based on temperature difference between sea water and a geothermal medium, wherein the geothermal medium is from at least one of a geothermic well or a water reservoir below the seabed.

13. The subsea power distribution system of any one of claims 1 to 12,
wherein at least one of the subsea nodes comprises a subsea monitoring device positioned on the seabed or below the seabed.

14. A method of assembling a subsea power distribution system for distributing power to one or more subsea nodes, the method comprising:
deploying an autonomous power source at or proximal to a seabed; and
coupling a mobile subsea vehicle to the autonomous power source, the mobile subsea vehicle being configured to receive power from the autonomous power source and distribute power to the one or more subsea nodes.
